Europäisches Patentamt

European Patent Office

Office européen des brevets

(11) Publication number: **0 379 237**
**A1**

(12) # EUROPEAN PATENT APPLICATION

(21) Application number: **90200047.0**

(22) Date of filing: **08.01.90**

(51) Int. Cl.⁵: **A23G 1/18, A23G 1/04**

(30) Priority: **19.01.89 IT 1912089**

(43) Date of publication of application:
**25.07.90 Bulletin 90/30**

(84) Designated Contracting States:
**AT BE CH DE ES FR GB GR LI LU NL SE**

(71) Applicant: **BRAVO S.p.A.**
**Via Lago di Molveno, 4**
**I-36100 Vicenza(IT)**

(72) Inventor: **Bravo, Francesco**
**Via Parini 1**
**I-36075 Montecchio Maggiore Vicenza(IT)**

(74) Representative: **Martegani, Franco**
**Via Damiano Chiesa, 56**
**I-20099 Sesto San Giovanni (Milano)(IT)**

(54) **Fast process for chocolate tempering.**

(57) A process for tempering chocolate in the form of pieces, which pieces are kept stirred inside a vessel, comprises three steps, and namely a first step of melting of the pieces of chocolate, a second step of cooling of the molten mass to a temperature lower than its solidifying point, and a third step of heating of the mass up to the temperature of chocolate tempering. The process is characterized in that said three steps are carried out in rapid sequence and within a time which is as short as possible.

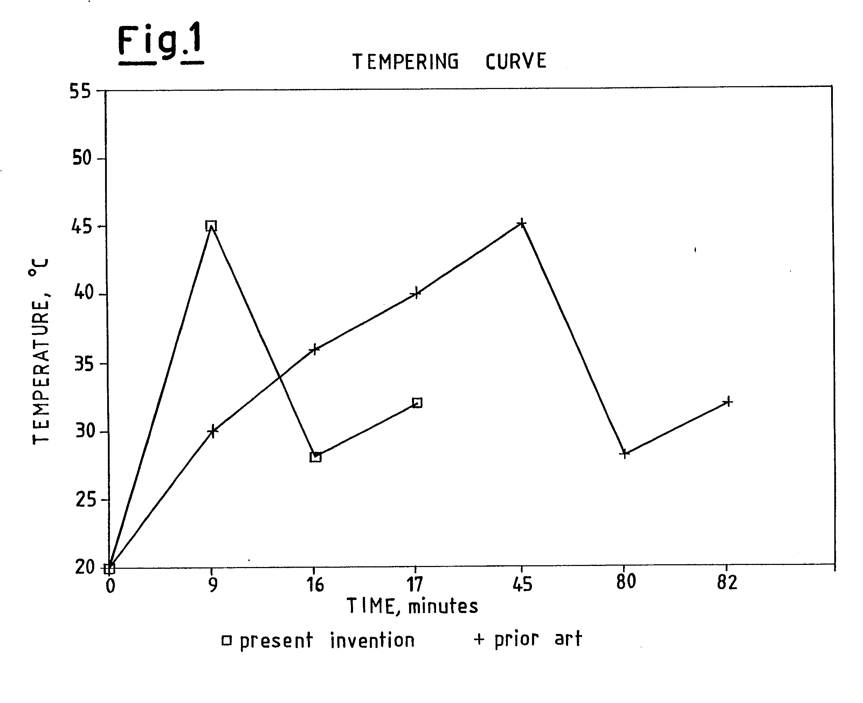

Fig.1 TEMPERING CURVE

□ present invention    + prior art

EP 0 379 237 A1

# FAST PROCESS FOR CHOCOLATE TEMPERING

The present invention relates to a fast process for chocolate tempering.

Chocolate tempering is a process whose purpose is of causing nuclei of crystals of solidified fat -- i.e., of cocoa butter -- to be formed immediately before the total solidification of the product takes place.

Inasmuch as chocolate can be regarded as a dispersion of sugar and cocoa in a continuous phase of a solidified fat, which fat is cocoa butter, this latter component is of basic importance for the stability and quality of the finished product.

The fat crystals which are formed during the tempering must be completely stabilized. The "crystal nuclei" which are first formed are the fatty portions of cocoa butter, having a higher melting point.

The tempering process substantially consists in completely melting chocolate, cooling it under its solidification point for a limited and controlled time, and finally bringing it, by means of a further increase in temperature, back to cocoa butter melting temperature.

By means of the tempering, chocolate is given its optimal structure with characteristics of stability over time, by means of an adequate shrinkage of the product from the molten state into its solid state, besides a stable gloss, which is a basic characteristic of the quality of the finished product.

Cocoa butter in polymorphous structure, and the nature of the crystalline form depend on the method of cooling of molten chocolate, and therefore on the operation of tempering.

If chocolate solidifies without the "crystallization nuclei" being formed, it will be of granular structure, and of an opaque colour, and will therefore have a poor quality.

In following Table 1 the polymorphous forms of cocoa butter are reported together with their physical characteristics:

Table 1

| Form type | Physical Characters and Formation Modalities |
|---|---|
| $\gamma$ | Obtained by rapid cooling <br> m.p. 17° C <br> Very unstable; turns rapidly into the next form: <br> m.p. 21-14° C |
| $\alpha$ | At room temperature turns into the next form: <br> m.p. 27-29° C |
| $\beta'$ | Unstable, tends to turn into the end form: <br> m.p. 34-35° C |
| $\beta$ | The stable form, which gives chocolate its ideal structure. |
| wherein m.p. stand for"melting point". | |

Therefore, it is this latter phase the one which one tries to obtain by means of the tempering process, through the preliminary formation of $\gamma$ and $\alpha$ crystals.

To date, those skilled in the art thought that the rate of chocolate cooling during the step of tempering should be low enough, in order to prevent the "under-tempering" to take place, which causes the very showy defect of "blooming", i.e., the emergence of fat at the external surface of the product, with said surface being consequently discoloured.

Also the "over-tempering", which is obtained when the process is carried out too slowly, is detrimental to the quality of the product, in that it causes a poor gloss and a limited stability over time.

See, e.g.:

M.G. Reade : "Controllo del temperaggio cioccolato

**(Control of chocolate tempering) Industrie Alim. 28.10.1988.**

J. Miniefie: "Chocolate, cocoa, confectionary tempering of chocolate"

Avibook USA 1971

H. Fincke : "Handbuch del Cacaoerzeugnisse [Handbook of cocoa products]", Springer Verlag, Berlin 1965

A. Baücker : "Schokolade Technik und Techologie [Technics and Technology of Chocolate]"

B.B.V. Süsswaren Handbuch 1975

J. Kleinert: "Studies on formation of fat blooms"
Int. Choc. Review 5, 1961.

In a batchwise chocolate tempering facility of known type, chocolate, broken into pieces in order to facilitate its melting, is charged to the machine, which consists of a cylindrical vessel equipped with a central shaft and product mixing/dragging blades. The vessel is provided with an outer jacket, wherein suitable heating and cooling systems alternatively carry out the operations required by the tempering process.

A digital temperature control system makes it possible the whole operation to be programmed with no need for resorting to the manual control by the operator.

Inside the tempering vessel, the product reaches first its fluidification temperature, then is undercooled and finally it is heated back up to its temperature of total melting.

The total time required for the whole process to take place in a tempering machine of known type which was tested by the present Applicant, was of 82 minutes for processing 5 kg of chocolate, as it is explained in the following in greater detail.

Contrarily to what those most skilled in the art thought and asserted heretofore, the present Applicant surprisingly found, according to the present invention, that the tempering of chocolate can be carried out within times which tipycally have to be considered as extremely short, when compared to the prior art, with an end product being anyway obtained, whose quality is at least equal to, if not even higher than, the quality of the product obtained according to the prior art.

More precisely, according to the present invention, a process for tempering chocolate in the form of pieces, which pieces are kept stirred inside a vessel, comprises: a first process step during which said pieces of chocolate are heated up to such a temperature, that a fluid and homogeneous mass is obtained, which mass is cooled during a second process step down to a temperature lower than its solidification point, and in a third step is heated up to a temperature of chocolate tempering, and is characterized in that said three steps are carried out in rapid sequence and within a time which is as short as possible.

For example, in said first process step, the chocolate pieces can be heated to a temperature comprised within the range of from 40°C to 48°C within a time comprised within the range of from 7 minutes to 11 minutes, in said process step the fluid mass can be cooled down to a temperature of about 28°C within a time comprised within the range of from 6 to 8 minutes, and in said third process step said chocolate mass can be heated up to a temperature of about 32°C within a time of about 1 minute.

According to a preferred form of practical embodiment of the method according to the present invention, in a first process step the chocolate pieces are turned into the liquid state at a temperature of 45°C within a time of 9 minutes, in said second step the fluid mass is cooled down to a temperature of 28°C within a time of 7 minutes, and in said third process step the chocolate mass is heated up to a temperature of 32°C within a time of 1 minute.

In order to demonstrate the novelty and originality thereof, a rapid tempering process carried out according to the teachings of the present invention was compared to a traditional process.

For the comparative testing of the product obtained by means of the two processes, a bitter chocolate was used, which has the following composition (Table 2):

Table 2

| Chocolate Composition | |
|---|---|
| Ingredients | % |
| Cocoa paste | 45.0 |
| Cocoa butter | 5.0 |
| Sugar | 50.0 |
| Lecithin | 0.2 |
| Vanilla | 0.1 |

The temperatures recorded during the tempering process by the electron control instruments of both of the machines used were the following: (Table 3)

Table 3

| Temperatures of Tempering Cycle | |
| --- | --- |
| Steps | Temperature |
| Beginning | 20°C |
| Total melting | 45°C |
| Undercooling | 28°C |
| Stabilization | 32°C |

In the chart of Figure 1, the two curves are reported, which relate to the two tempering processes respectively carried out according to the traditional technique, and according to the present invention.

From the analysis of the curves, the difference in process times is clearly detected (Table 4):

Table 4

| Tempering Times and Temperatures | | |
| --- | --- | --- |
| | Times | Temperatures |
| Processes | (as minutes) | (as °C) |
| Traditional process | 0 | 20 |
| | 45 minutes | 45 |
| | 80 minutes | 28 |
| | 82 minutes | 32 |
| Process according to the present invention | 0 | 20 |
| | 9 minutes | 45 |
| | 16 minutes | 28 |
| | 17 minutes | 32 |

The tempering carried out by means of the process according to the present invention was carried out within a 17-minutes time, vs. the time of 82 minutes as required by the traditional process.

The checks which were carried out on both of said finished products are those which are usually adopted for chocolate quality analysis:

1) Hardness, on solidified product
2) Viscosity, on the still fluid product at tempering end
3) Sensory evaluation, on solidified product.

Results of the analyses:

Hardness

The hardness of a chocolate is a very important quality, in that it defines the mechanical stability of the same product, and its suitability for consumption by the end consumer.

Said hardness should be high enough, in order to secure the transport and handling of chocolate, but not excessively high, in order to facilitate chocolate consumption by the consumers.

The analysis is carried out by means of machines which perform an action of breakage on a determined and homogeneous sample by means of increasing-weight metal balls.

The equation used for reading the hardness of the samples is as follows:

$$HARDNESS = \frac{ball\ weight * 100}{k * Db(Db - (Db^2 - D^2)1/2)}$$

wherein:

k is a constant

Db is the diameter of the ball, and

D is the diameter of the impression caused by the same ball on sample surface.

The results of the hardness analyses carried out on both of the above samples are reported in following Table 5.

Table 5

| Applied weights | Test time | Hardness | |
|---|---|---|---|
| g | seconds | Prior art | Present invention |
| 200 | 60 | 9.8 | 9.9 |
| 500 | 30 | 14.3 | 14.0 |
| 500 | 60 | 10.0 | 10.4 |
| 500 | 120 | 10.1 | 10.2 |
| 1200 | 60 | 9.6 | 9.4 |

From the above reported results, one can clearly see that no differences exist between the hardness values of the chocolate grades obtained by means of the two tempering systems.

## Viscosity

This physical property of the product in the molten state is important, in that it defines the ease with which chocolate can be sent to the various processing steps by means of a pneumatic transport system.

The viscosity also conditions the facility of preservation of the crystallization nuclei, and consequently of favouring a perfect solidification. A chocolate with a too high viscosity value will originate a product difficult to set-up, i.e., difficultly shrinking during the step of solidification inside the shaping moulds.

Chocolate viscosity was measured by means of the method based on gravity falling through a calibrated orifice, and is expressed as the time required for a constant-weight amount of chocolate to flow through said orifice.

Also from this latter check results were obtained with the two tempering systems, which are at all comparable (Table 6).

Table 6

| | 1st Test | 2nd Test |
|---|---|---|
| | Present Invention | Prior Art |
| * Viscosity at 30° C, as centistokes | 895 | 902 |
| * Viscosity at 30° C, as centipoises | 1155 | 1163 |

Sensory Analysis

A test panel composed by 6 people expressed judgements about the following physical-chemical proporties of both of above chocolate samples:
- Taste
- Consistency
- Gloss.
    The following scale of values was used:
    1 = poor
    2 = fairly good
    3 = good
    4 = very good.
The results, expressed as average values, are reported in following Table 7.

Table 7

| Sensory Analysis | | |
|---|---|---|
| | Value | |
| Property | Prior Art | Present Invention |
| - Taste | 3.8 | 4.0 |
| - Consistency | 3.7 | 3.9 |
| - Gloss | 3.5 | 3.9 |

The results from the sensory analysis confirm that by means of the method according to the present invention, a chocolate can be obtained, whose sensory characteristics are even better than of the traditional product, and within an extremely short time.


**Claims**

1. Process for tempering chocolate in the form of pieces, which pieces are kept stirred inside a vessel, comprising a first process step during which said pieces of chocolate are heated up to such a temperature, that a fluid and homogeneous mass is obtained, which mass is cooled during a second process step to a temperature lower than its solidification point, and in a third step is heated up to a temperature of chocolate tempering, characterized in that said three steps are carried out in rapid sequence and within a time which is as short as possible.

2. Process according to claim 1, characterized in that in said first process step, the chocolate pieces can be heated to a temperature comprised within the range of from 40°C to 48°C within a time comprised within the range of from 7 minutes to 11 minutes, that in said process step the fluid mass can be cooled down to a temperature of about 28°C within a time comprised within the range of from 6 to 8 minutes, and that in said third mass said chocolate mass can be heated to a temperature of about 32°C within a time of about 1 minute.

3. Process according to claim 1, characterized in that in said first process step the chocolate pieces are turned into the liquid state at a temperature of 45°C within a time of 9 minutes, that in said second step the fluid mass is cooled down to a temperature of 28°C within a time of 7 minutes, and that in third process step the chocolate mass is heated up to a temperature of 32°C within a time of 1 minute.

**Fig.1**

TEMPERING CURVE

□ present invention     + prior art

TIME, minutes

TEMPERATURE, °C

EP 0 379 237 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 289 849 (SOLLICH GmbH) * Column 14, line 33 - column 15, line 19; claims 1,5,6; figure 5 * --- | 1 | A 23 G 1/18 A 23 G 1/04 |
| Y | US-A-3 638 553 (KREUTER) * Abstract * --- | 1 | |
| A | CH-A- 649 444 (NESTLE) * Examples 1,2 * ----- | 1 | |

TECHNICAL FIELDS SEARCHED (Int. Cl.5)

A 23 G

The present search report has been drawn up for all claims

| Place of search | Date of completion of the search | Examiner |
|---|---|---|
| THE HAGUE | 19-04-1990 | LEPRETRE F.G.M.J. |